# EUROPEAN PATENT APPLICATION

(11) **EP 4 700 706 A1**
(43) Date of publication of application: **25.02.2026**
(21) Application number: 25196458.1
(22) Date of filing: 18.08.2025
(51) Int. Cl.: G06T 7/80

(54) **METHOD AND APPARATUS FOR CALIBRATING EXTERNAL CAMERA OF HEADSET, DEVICE, AND STORAGE MEDIUM**

(30) Priority: 20.08.2024 CN 202411148231
(71) Applicant: Beijing Zitiao Network Technology Co., Ltd., Beijing 100190 (CN)
(72) Inventor: ZOU, Chao, Beijing, 100028 (CN)
(74) Representative: Grünecker Patent- und Rechtsanwälte PartG mbB

(57) **Abstract**

The present disclosure provides a method and an apparatus for calibrating an external camera of a headset, a device, and a storage medium. The method includes: obtaining first three-dimensional coordinates of a hand controller when a user puts the hand controller close to a camera, and determining a position of the camera according to the first three-dimensional coordinates, the camera being disposed fixedly and configured to shoot a behavior of the user; displaying an image shot by the camera, with visual marking information being displayed at a central position of the image; obtaining second three-dimensional coordinates of the hand controller when the hand controller is located at a position of the visual marking information in the image; and determining a pose of the camera according to the first three-dimensional coordinates and the second three-dimensional coordinates. According to the method, the user can rapidly complete a calibration of the camera by only needing to determine two points using the hand controller, and a calibration process is simple and easy to operate, and a calibration result is accurate.

## Description

### TECHNICAL FIELD

Embodiments of the present disclosure relate to the field of virtual reality, and in particular, to a method and apparatus for calibrating an external camera of a headset, a device, and a storage medium.

### BACKGROUND

Mixed Reality Capture (MRC) means shooting a real image of a player (or called a user) by an external camera of a headset and fusing the real image with a virtual scene of the headset to create a unique mixed reality video or photo, putting the player in the virtual scene.

Before MRC, the calibration of the camera is required such that the pose (position and orientation) of the camera is consistent with a pose of a virtual camera in the virtual scene, thereby realizing that an action of the player is consistent with the action effect in the virtual scene. In the prior art, a user needs to stand about 1 meter ahead of a camera of a mobile phone and conducts an action of drawing a circle by moving a joypad upwards. The mobile phone extracts a feature point on the joypad according to an image shot by the camera of the mobile phone (i.e., camera) and determines the three-dimensional coordinates of the feature point on the joypad according to the three-dimensional coordinates of the joypad sent by a headset. The mobile phone calculates the pose of the camera of the mobile phone according to two-dimensional coordinates and the three-dimensional coordinates of the feature point on the joypad using a perspective-n-point (PNP) algorithm and sends the pose of the camera of the mobile phone to the headset.

However, this calibration process may be easily influenced by ambient light, a distance, a joypad shape, etc., and the calibration is easy to fail.

### SUMMARY

Embodiments of the present disclosure provide a method and apparatus for calibrating an external camera of a headset, a device, and a storage medium. According to the method, the user can rapidly complete a calibration of the camera by only needing to determine two points using the hand controller, and a calibration process is simple and easy to operate, and a calibration result is accurate.

In a first aspect, the embodiments of the present disclosure provide a method for calibrating an external camera of a headset , the method being applicable to a headset and comprising:
obtaining first three-dimensional coordinates of a hand controller when a user puts the hand controller close to a camera, and determining a position of the camera according to the first three-dimensional coordinates, the camera being disposed fixedly and configured to shoot a behavior of the user;
displaying an image shot by the camera, with visual marking information being displayed at a central position of the image;
obtaining second three-dimensional coordinates of the hand controller when the hand controller is located at a position of the visual marking information in the image; and
determining a pose of the camera according to the first three-dimensional coordinates and the second three-dimensional coordinates.

In some exemplary embodiments, the determining a pose of the camera according to the first three-dimensional coordinates and the second three-dimensional coordinates comprises:
determining a first vector according to the first three-dimensional coordinates and the second three-dimensional coordinates, and determining a pitch angle and a yaw angle of the camera according to the first vector, a roll angle of the camera being a fixed value; and
determining the pose of the camera according to the pitch angle, the yaw angle, and the roll angle of the camera.

In some exemplary embodiments, the determining the pose of the camera according to the pitch angle, the yaw angle, and the roll angle of the camera comprises:
performing quaternion conversion on the pitch angle, the yaw angle, and the roll angle of the camera to obtain the pose of the camera.

In some exemplary embodiments, the determining a position of the camera according to the first three-dimensional coordinates comprises:
determining the first three-dimensional coordinates as three-dimensional coordinates of the camera; or
adjusting the first three-dimensional coordinates according to a preset adjustment parameter to obtain the three-dimensional coordinates of the camera.

In some exemplary embodiments, the camera is disposed fixedly according to a preset direction in which at least one edge of an image shot by the camera is parallel to a horizontal plane.

In some exemplary embodiments, a value of the roll angle of the camera is 0.

In some exemplary embodiments, after the obtaining second three-dimensional coordinates of the hand controller when the hand controller is located at a position of the visual marking information in the image, the method further comprising:
controlling the visual marking information to move to a fixed position in the image, and obtaining a confirmation instruction input by the user through the hand controller, the instruction being configured to confirm that at least one edge of the image shot by the camera is parallel to a horizontal plane.

In some exemplary embodiments, the visual marking information is a crosshair or a circle.

In some exemplary embodiments, the obtaining first three-dimensional coordinates of a hand controller when a user puts the hand controller close to a camera comprises:
receiving a coordinate obtaining instruction, the coordinate obtaining instruction being input when the user puts the hand controller close to the camera; and
in response to the coordinate obtaining instruction, detecting three-dimensional coordinates of the hand controller at a moment corresponding to the coordinate obtaining instruction, and using the three-dimensional coordinates of the hand controller at the moment corresponding to the coordinate obtaining instruction as the first three-dimensional coordinates.

In some exemplary embodiments, the coordinate obtaining instruction is an operation of the user on a determination control of the hand controller.

In some exemplary embodiments, the method further comprising:
in response to receiving a calibration starting instruction, displaying an operation demonstration image, and playing in voice first operation prompt information, the operation demonstration image being a schematic diagram of putting the hand controller close to the camera, and the first operation prompt information being configured to prompt the user to put the hand controller close to the camera and then input the coordinate obtaining instruction.

In some exemplary embodiments, the obtaining second three-dimensional coordinates of the hand controller when the hand controller is located at a position of the visual marking information in the image comprises:
receiving a coordinate obtaining instruction, the coordinate obtaining instruction being input when the hand controller is located at the position of the visual marking information in the image; and
in response to the coordinate obtaining instruction, detecting three-dimensional coordinates of the hand controller at a moment corresponding to the coordinate obtaining instruction, and using the three-dimensional coordinates of the hand controller at the moment corresponding to the coordinate obtaining instruction as the second three-dimensional coordinates.

In some exemplary embodiments, the coordinate obtaining instruction is an operation of the user on a determination control of the hand controller.

In some exemplary embodiments, after the displaying an image shot by the camera, the method further comprising:
playing in voice and/or displaying in text second operation prompt information, the second operation prompt information being configured to prompt the user to align a position of the hand controller to the visual marking information and then input the coordinate obtaining instruction.

In some exemplary embodiments, after a completion of calibrating the camera, the method further comprising:
setting a pose of a virtual camera in a virtual scene according to the pose of the camera such that the pose of the virtual camera is consistent with the pose of the camera; and
receiving a user picture shot by the camera, fusing the virtual scene with the user picture, and storing a fused virtual scene.

In some exemplary embodiments, the camera is a mobile phone camera, a computer camera, or a special camera.

In a second aspect, the embodiments of the present disclosure provide an apparatus for calibrating an external camera of a headset, the apparatus comprising:
an obtaining module configured to obtain first three-dimensional coordinates of a hand controller when a user puts the hand controller close to a camera, and determine a position of the camera according to the first three-dimensional coordinates, the camera being disposed fixedly and configured to shoot a behavior of the user;
an image processing module configured to display an image shot by the camera, with visual marking information being displayed at a central position of the image;
the obtaining module being further configured to obtain second three-dimensional coordinates of the hand controller when the hand controller is located at a position of the visual marking information in the image; and
a determination module configured to determine a pose of the camera according to the first three-dimensional coordinates and the second three-dimensional coordinates.

In a third aspect, the embodiments of the present disclosure provide a headset, comprising: a processor and a memory, the memory being configured to store a computer program, and the processor being configured to call and run the computer program stored in the memory to perform the method according to the above first aspect.

In a fourth aspect, the embodiments of the present disclosure provide a computer-readable storage medium, configured to store a computer program which causes a computer to perform the method according to the above first aspect.

In a fifth aspect, the embodiments of the present disclosure provide a computer program product including instructions which, when executed by a computer, cause the computer to perform the methods according to the above first aspect.

The Embodiments of the present disclosure provide a method and an apparatus for calibrating an external camera of a headset, a device and a storage medium. The method includes: obtaining first three-dimensional coordinates of a hand controller when a user puts the hand controller close to a camera, and determining a position of the camera according to the first three-dimensional coordinates, the camera being disposed fixedly and configured to shoot a behavior of the user; displaying an image shot by the camera, with visual marking information being displayed at a central position of the image; obtaining second three-dimensional coordinates of the hand controller when the hand controller is located at a position of the visual marking information in the image; and determining a pose of the camera according to the first three-dimensional coordinates and the second three-dimensional coordinates. According to the method, the user can rapidly complete a calibration of the camera by only needing to determine two points using the hand controller, and a calibration process is simple and easy to operate, and a calibration result is accurate.

### BRIEF DESCRIPTION OF DRAWINGS

In order to describe the technical solutions in the embodiments of the present disclosure more clearly, the accompanying drawings required for describing the embodiments are briefly described below. Apparently, the accompanying drawings described below are only some embodiments of the present disclosure. Those of ordinary skill in the art may further derive other drawings from these drawings without creative efforts.
Fig. 1 is a schematic diagram of a mixed reality capture scene applicable to an embodiment of the present disclosure;
Fig. 2 is a flowchart of a method for calibrating an external camera of a headset according to the embodiments of the present disclosure;
Fig. 3 is a schematic diagram of putting a hand controller close to a camera;
Fig. 4 is a schematic diagram of a hand controller being located at the position of visual marking information in an image;
Fig. 5 is a schematic diagram of a relationship of P0 and P1 with a camera plane;
Fig. 6 is a flowchart of mixed reality capture of a headset according to the embodiments of the present disclosure;
Fig. 7 is a structural schematic diagram of an apparatus for calibrating an external camera of a headset according to the embodiments of the present disclosure; and
Fig. 8 is a structural schematic diagram of a headset according to the embodiments of the present disclosure.

### DETAILED DESCRIPTION

In the following, the technical solutions in the embodiments of the present disclosure will be clearly and completely described with reference to the attached drawings. Obviously, the described embodiments are only a part of the embodiments of the present disclosure, but not the whole embodiments. Based on the embodiments in the present disclosure, all other embodiments obtained by ordinary technicians in the field without creative work belong to the scope of protection of the present disclosure.

It should be noted that the terms "first" and "second" in the description and claims of the present disclosure and the above drawings are used to distinguish similar objects, and are not necessarily used to describe a specific order or sequence. It should be understood that the data thus used are interchangeable under appropriate circumstances, so that the embodiments of the present disclosure described herein can be implemented in other orders than those illustrated or described herein. Furthermore, the terms "including" and "having" and any variations thereof are intended to cover non-exclusive inclusion, for example, a process, method, system, product or server that includes a series of steps or units is not necessarily limited to those explicitly listed, but may include other steps or units not explicitly listed or inherent to these processes, methods, products or devices.

An embodiment of the present disclosure provides a method for calibrating an external camera of a headset, which is applicable to a headset. The headset is also called an extended reality (XR) device. XR refers to all real and virtual combined environments generated by the computer technology and a wearable device and human-computer interaction. XR takes a plurality of forms such as virtual reality (VR), augmented reality (AR), and mixed reality (MR).

For ease of understanding of the embodiments of the present disclosure, before describing the embodiments of the present disclosure, some concepts in the XR scene involved in all the embodiments of the present disclosure are appropriately explained first below.

1) VR: it is a technique for creating and experiencing a virtual world. To determine and generate a virtual environment, multi-source information (the virtual reality mentioned herein includes at least visual perception, and may also include auditory perception, haptic perception, motion perception, and even gustatory perception, olfactory perception, etc.) is used to realize a fused, interactive three-dimensional dynamic visual scene of the virtual environment and realize simulation of entity behaviors, allowing a user to be immersed in the simulated virtual reality environment. The applications of VR in a plurality of virtual environments such as map, game, video, education, medical treatment, simulation, cooperative training, sales, assisted manufacturing, maintenance, and repair.

2) Virtual reality device (VR device): it is a terminal for realizing the virtual reality effect, which can be typically provided in the form of glasses, a head mount display (HMD), or contact lenses for realizing visual perception and other forms of perceptions. As a matter of course, the implementation forms of the virtual reality device are not limited thereto. The virtual reality device can be further miniaturized or enlarged according to actual requirements.

Optionally, the virtual reality device described in the embodiments of the present disclosure may include, but is not limited to, the following several types:
2.1) Personal computer virtual reality (PCVR) device: it utilizes a PC to perform related computation and data output of the virtual reality function. An external PCVR device achieves the effect of virtual reality with data output by the PC.

2.2) Mobile virtual reality device: it supports disposing a mobile terminal (e.g., a smart phone) in various ways (e.g., a head-mounted display with a special clamping groove), and through wired or wireless connection with the mobile terminal, the related computation of the virtual reality function is performed by the mobile terminal and data is output to the mobile virtual reality device. For example, a virtual reality video is watched via an APP of the mobile terminal.

2.3) All-in-one machine virtual reality device: it has a processor configured to perform the related computation of the virtual reality function and thus has independent virtual reality input and output functions, and does not need to be connected with a PC or a mobile terminal with high flexibility of use.

3) Virtual field of view: it refers to an area in the virtual environment that a user may perceive in the virtual reality device through lenses. The area perceived is represented by using field of view (FOV) in the virtual field of view.

4) AR: it is a technique for calculating camera pose parameters of a camera in the real world (or called three-dimensional world, or actual world) in real time in the process of the camera capturing an image, and adding a virtual element to the image captured by the camera according to the camera pose parameters. The virtual element includes, but is not limited to, an image, a video, and a three-dimensional model. The objective of the AR technique is to overlap, on the screen, the virtual world on the real world for interaction.

5) MR: a simulated scene obtained by integrating a sensory input (e.g., a virtual object) created by the computer and a sensory input from a physical scene or a representation thereof. In some MR scenes, the sensory input created by the computer can be adapted to the changes of the sensory input from the physical scene. In addition, some electronic systems for presenting the MR scene can monitor an orientation and/or a position relative to the physical scene so that the virtual object can interact with a real object (i.e., a physical element from the physical scene or a representation thereof). For example, the system can monitor motion such that the virtual object is still relative to a physical building.

6) Virtual scene: it is a virtual scene displayed (or provided) when an application runs on an electronic device. The virtual scene may be a simulated environment of the actual world, or a halfsimulated and half-virtual scene, or a purely virtual scene. The virtual scene may be any one of a two-dimensional virtual scene, a 2.5-dimensional virtual scene, or a three-dimensional virtual scene. The dimensions of the virtual scene are not limited in the embodiments of the present disclosure. For example, the virtual scene may include sky, land, sea, etc. The land may include environmental elements such as desert and city. The user can control the virtual object to move in the virtual scene.

7) Virtual object: it is an object interacting in the virtual scene and controlled by the user or a robot program (e.g., a robot program based on artificial intelligence), i.e., an object that can be still, move, and conduct various behaviors in the virtual scene, such as various characters in a game.

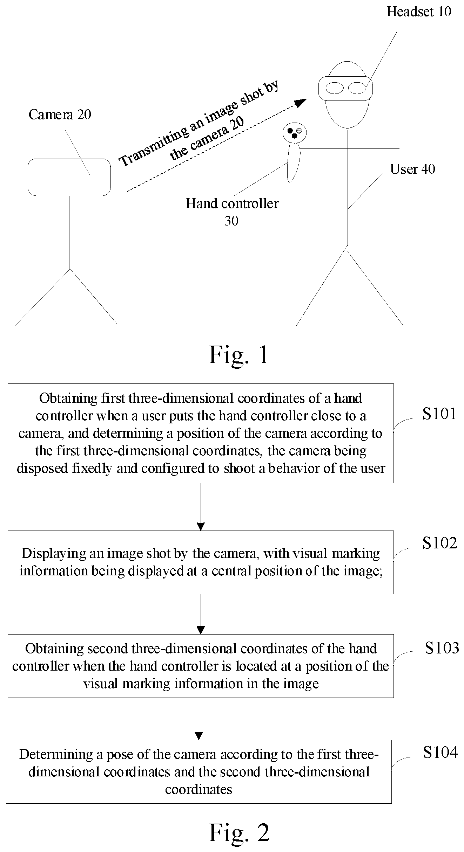

To describe the technical solutions of the present disclosure clearly, the application scenarios of the technical solutions of the present disclosure are described below. Fig. 1 is a schematic diagram of a mixed reality capture scene applicable to an embodiment of the present disclosure. As shown in Fig. 1, the scene includes a headset 10, an external camera 20 (i.e., the camera 20 is an external device relative to the headset), a hand controller 30, and a user (or called a player) 40.

The camera 20 is disposed fixedly in a real scene (or called a physical scene). The camera 20 is disposed in front of the user 40. The camera 20 shoots a behavior of the user 40. Therefore, the camera 20 is also called a third perspective camera.

In an embodiment of the present disclosure, the camera 20 may be a mobile phone camera, a computer camera, or a special camera. The computer may be a desktop computer, a notebook computer, or a tablet computer, etc.

The camera 20 may be disposed fixedly on a mounting bracket. For example, for a mobile phone and a tablet computer, it can be fixed on a bracket at an appropriate height such that a rear camera of the mobile phone or a rear camera of the computer directly faces the user. For a desktop computer, a notebook computer, or the like, it can be placed on furniture or a dedicated device at an appropriate height, e.g., placed on a desk.

The headset 10 is worn on the head of the user 40. The user 40 holds the hand controller 30 in hand to move. The hand controller 30 may be a joypad, a wristband, or the like.

Before starting mixed reality capture, the camera 20 needs to establish connection with the headset 10 to facilitate communication therebetween. The camera 20 may be in wired or wireless communication with the headset 10. The wireless communication includes, but is not limited to, wireless fidelity (WiFi), Bluetooth, etc. Taking WiFi communication as an example, before starting mixed reality capture, the camera 20 and the headset 10 need to connect to the same WiFi.

A mixed reality capture related application (APP) needs to be installed on both of the headset 10 and the camera 20. For example, a VR assistant is installed on the camera. The user 40 turns on the mixed reality capture function by the VR assistant first such that the camera 20 starts capturing. A picture shot by the camera 20 includes an image and an action of the user 40.

The user wears the headset 10 and opens the mixed reality capture APP on the headset 10. A calibration function entry is displayed in the page of the mixed reality capture APP, and the calibration function is turned on through the calibration function entry. The calibration function is configured to calibrate an image shot by the camera and a virtual scene, or may also be described as calibrating a pose of the camera 20 and a pose of a virtual camera in the virtual scene such that the pose of the camera 20 stays consistent with the pose of the virtual camera. When the pose of the camera 20 is consistent with the pose of the virtual camera in the virtual scene, the image shot by the camera is aligned with the virtual scene.

The virtual scene is shot by the virtual camera in the XR application. The picture shot by the camera 20 includes the user 40. The principle of calibration is as follows: the pose of the camera 20 is detected; the pose of the camera 20 is sent to the virtual camera such that the virtual camera is placed at the same pose with the camera 20. In this way, the virtual camera can perform shooting or capturing at the same position and the same angle with the camera 20. Correspondingly, the picture of the virtual scene is aligned with the user picture shot by the camera 20.

Fig. 2 is a flowchart of a method for calibrating an external camera of a headset according to the embodiments of the present disclosure. The method is applicable to the headset. The method of the embodiment is described with reference to Fig. 1 and Fig. 2. As shown in Fig. 2, The method of the embodiment includes the following steps.

At S101, first three-dimensional coordinates of a hand controller when a user puts the hand controller close to a camera are obtained, and a position of the camera is determined according to the first three-dimensional coordinates. The camera is disposed fixedly and configured to shoot a behavior of the user.

Before the calibration starts, the user fixes the camera at a suitable position first. In an embodiment of the present disclosure, a direction in which the camera is fixed should be such that an image shot by the camera is parallel to a horizontal plane as much as possible. Exemplarily, the camera is disposed fixedly according to a preset direction such that at least one edge of an image shot by the camera is parallel to the horizontal plane. After the calibration starts, and in the mixed reality capture process, the pose of the camera remains unchanged.

After the camera is mounted, a connection is established between the camera and the headset. Then, the mixed reality capture related APP on the camera and the headset is opened. After the user turns on the mixed reality capture function on the headset, the calibration function is turned on to start the calibration of the pose of the camera.

The first step of the calibration is to obtain the position of the camera. After the calibration starts, the user stands in front of the camera by holding the hand controller in hand and perform a corresponding action according to a prompt of the headset. Exemplarily, in response to receiving a calibration starting instruction, an operation demonstration image is displayed, and first operation prompt information is played in voice. The user performs the corresponding action according to the operation demonstration image and the first operation prompt information.

The operation demonstration image is a schematic diagram of putting the hand controller close to the camera, and the first operation prompt information is configured to prompt the user to put the hand controller close to the camera and then input the coordinate obtaining instruction.

Putting the hand controller close to the camera refers to the hand controller being in contact with the camera or a distance therebetween being tiny and negligible. In the embodiment, the contact position or the contact area of the hand controller and the camera is not limited as long as they are in contact.

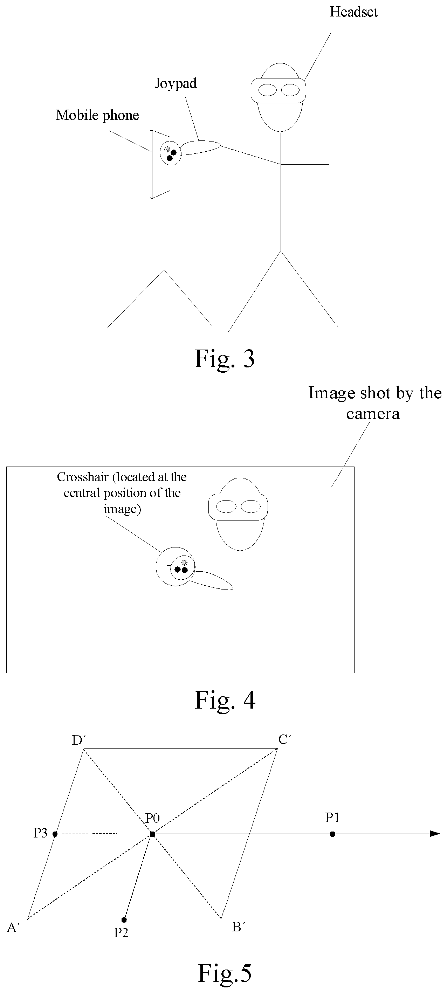

Fig. 3 is a schematic diagram of putting a hand controller close to a camera. As shown in Fig. 3, the hand controller shown in the figure is a joypad, and the camera is a mobile phone camera. The joypad is in contact with the front side of the mobile phone.

The user moves the hand controller to the position of the camera and puts it close to the camera according to the operation demonstration image and the first operation prompt information. After the hand controller is close to the camera, the user inputs the coordinate obtaining instruction.

The headset receives the coordinate obtaining instruction and obtains the first three-dimensional coordinates of the hand controller according to the coordinate obtaining instruction. Exemplarily, in response to the coordinate obtaining instruction, the headset detects the three-dimensional coordinates of the hand controller at the moment corresponding to the coordinate obtaining instruction and uses the three-dimensional coordinates of the hand controller at the moment corresponding to the coordinate obtaining instruction as the first three-dimensional coordinates.

The coordinate obtaining instruction is configured to instruct obtaining of the three-dimensional coordinates of the hand controller at the current moment or the moment corresponding to the coordinate obtaining instruction. The moment corresponding to the coordinate obtaining instruction may be a moment of receiving the coordinate obtaining instruction.

In an implementation, the coordinate obtaining instruction may be an operation of the user on a determination control of the hand controller. Taking the joypad as an example, the operation of the user on the determination control of the hand controller may be a tapping or pressing operation of the user on a trigger key of the joypad. After moving the joypad close to the camera, the user taps on the trigger key of the joypad, and the headset obtains the first three-dimensional coordinates of the joypad.

Optionally, the user may also input the coordinate obtaining instruction in other interaction manners. For example, the coordinate obtaining instruction is input through eye interaction, a gesture, or speech.

The first three-dimensional coordinates are the three-dimensional coordinates of the hand controller when the user puts the hand controller close to the camera. At this point, since the hand controller is close to the camera, the three-dimensional coordinates of the hand controller are also the three-dimensional coordinates of the camera.

In an implementation, the headset determines the first three-dimensional coordinates of the hand controller as the three-dimensional coordinates of the camera (i.e., the position of the camera).

In another implementation, the headset adjusts the first three-dimensional coordinates of the hand controller according to a preset adjustment parameter to obtain the three-dimensional coordinates of the camera. It will be understood that both the hand controller and the camera have a certain volume. When they are put close to each other, there is a deviation between their positions. That is, the position of the hand controller is not completely equivalent to the position of the camera. The deviation can be neglected in most of scenarios. In this implementation, the deviation can be compensated with the preset adjustment parameter.

At S102, an image shot by the camera is displayed, with visual marking information being displayed at a central position of the image.

In the embodiment, after the calibration function is turned on, a video seethrough (VST) mode is enabled by default. The VST technique involves acquiring a real-time view of the surroundings by the camera, and then in combination with the computer technology, presenting the real-time view on a nontransparent display, giving a feeling that the human eyes can see the surrounding real world directly through the headset. Therefore, it is also called the seethrough function, which enhances the perception of the surroundings by the user.

The camera sends a 2D image shot by the camera itself to the headset. The 2D image includes a user image. The headset displays the image shot by the camera on a display screen such that the user sees himself/herself in the picture of the headset. Optionally, the headset may display the image shot by the camera in a VST image.

Since the camera directly faces the user to perform shooting, an image of the front of the user is shot. Therefore, the image shot by the camera that is displayed on the display screen of the headset is a mirror image of the user so that the user can see himself/herself in the picture of the headset.

The visual marking information is displayed at the central position of the image shot by the camera that is displayed on the headset. The visual marking information is used for prompting that the current location is the central position of the image.

Exemplarily, the visual marking information is a crosshair or a circle. The shape of the crosshair is similar to a cross, which is composed of two intersecting lines. The crosshair may also be surrounded by a circle, and the crosshair is located within the circle.

The visual prompt information may also be a solid or hollow circle. As a matter of course, the visual marking information is not limited to the crosshair or the circle, or may be in other shapes or images. For example, the visual marking information may also be a circular ring.

Optionally, the visual marking information may also be added with some effects to enhance the visual effect so that the user can lock the visual marking information rapidly and accurately. For example, the visual marking information is highlighted or flickers continuously.

Optionally, prompt information may also be displayed around the visual marking information. The prompt information is used for prompting the user to align the position of the hand controller to the visual marking information.

In an implementation, in response to obtaining the first three-dimensional coordinates, the headset displays the image shot by the camera. Optionally, the headset may also display the image shot by the camera based on an operation of the user or other triggering conditions.

At S103, second three-dimensional coordinates of the hand controller when the hand controller is located at the position of the visual marking information in the image are obtained.

After the first three-dimensional coordinates of the hand controller are obtained, the picture of the headset is switched from the operation demonstration image to the image shot by the camera. That is, the user sees himself/herself in the picture of the headset. After the image shot by the camera is displayed. Optionally, the headset plays in voice and/or displays in text second operation prompt information. The second operation prompt information is configured to prompt the user to align a position of the hand controller to the visual marking information and then input the coordinate obtaining instruction.

The user moves the joypad according to the second operation prompt information such that the hand controller is located at the position of the visual marking information in the image. It needs to be emphasized that here, the hand controller being located at the position of the visual marking information refers to the hand controller being located at the position of the visual marking information in a VST image that the user sees, rather than an interactive ray emitted by the hand controller being located at the position of the visual marking information.

Fig. 4 is a schematic diagram of a hand controller being located at the position of visual marking information in an image. As shown in Fig. 4, a crosshair is displayed at the central position of the image shot by the camera. There is a circle around the crosshair, and the crosshair is located at the center of the circle. The center of the circle is the central coordinate point of the image.

Optionally, the visual marking information is in a transparent or semi-transparent state so that the user can see the position of the joypad in the image when the user moves the joypad to the position of the visual marking information.

When the hand controller is located at the position of the visual marking information in the image, the user inputs a coordinate obtaining instruction, and the headset receives the coordinate obtaining instruction, and obtains the second three-dimensional coordinates of the hand controller in response to the coordinate obtaining instruction.

Exemplarily, the headset device detects, according to the coordinate obtaining instruction, the three-dimensional coordinates of the hand controller at the moment corresponding to the coordinate obtaining instruction, and uses the three-dimensional coordinates of the hand controller at the moment corresponding to the coordinate obtaining instruction as the second three-dimensional coordinates. The moment corresponding to the coordinate obtaining instruction may be the current moment or the moment of receiving the coordinate obtaining instruction.

In an implementation, the coordinate obtaining instruction may be an operation of the user on a determination control of the hand controller. Taking the joypad as an example, the operation of the user on the determination control of the hand controller may be a tapping or pressing operation of the user on a trigger key of the joypad. After moving the joypad such that the joypad is located at the position of the crosshair in the picture in the image, the user taps on the trigger key of the joypad, and the headset obtains the second three-dimensional coordinates of the joypad.

Optionally, the user may also input the coordinate obtaining instruction in other interaction manners. For example, the coordinate obtaining instruction is input through eye interaction, a gesture, or speech.

At S104, a pose of the camera is determined according to the first three-dimensional coordinates and the second three-dimensional coordinates.

In an implementation, the headset determines a first vector according to the first three-dimensional coordinates and the second three-dimensional coordinates, and determines a pitch angle and a yaw angle of the camera according to the first vector. A roll angle of the camera is at a fixed value. The pose of the camera is determined according to the pitch angle, the yaw angle, and the roll angle of the camera.

The first three-dimensional coordinates of the hand controller are denoted by P0, and the second three-dimensional coordinates of the hand controller are denoted by P1. The three-dimensional coordinates of P0 and P1 may be coordinates in a headset coordinate system. Under normal circumstances, when the user wears the headset, the horizontal direction is the X-axis direction of the headset coordinate system, a vertical direction (i.e., the direction of gravity) is the Y-axis direction of the headset coordinate system, and a front-and-back direction of the user is the Z-axis direction of the headset coordinate system.

The calibration of the camera is to determine the pose of the camera. The pose of the camera includes a position and an orientation. The position of the camera may be values of the camera on the X, Y, and Z axes of the headset coordinate system, and the orientation of the camera may be rotation angles of the camera on the X, Y, and Z axes of the headset coordinate system. The orientation of the camera includes three angles: yaw, pitch, and roll angles. The angle of rotation about the X-axis is called the pitch angle, the angle of rotation about the Y-axis is called the yaw angle, and the angle of rotation about the Z-axis is called the roll angle.

The first vector is obtained based on P0 and P1. The first vector is denoted as vector P0P1. The vector P0P1 is placed in the headset coordinate system. The rotation angle (i.e., the pitch angle) of the camera on the X-axis and the rotation angle (i.e., the yaw angle) of the camera on the Y-axis can be calculated according to the vector P0P1. In this embodiment, since the camera (or a picture shot by the camera) is parallel to the ground by default, the roll angle of the camera does not need to be calculated. The roll angle of the camera is at a fixed value.

Optionally, the roll angle of the camera is 0. Correspondingly, when fixing the camera, the user should make a picture shot by the camera parallel to the ground as much as possible, thereby guaranteeing that the roll angle of the camera is 0 or approximate to 0.

In this embodiment, P0 is the position of the camera. The central position of the image shot by the camera is the central position of the camera. When the hand controller is located at the central position of the image in the image, the hand controller is perpendicular to the center of the camera relative to the camera. Therefore, P1 formed when the hand controller is located at the central position of the image in the image is located in a ray that originates from P0 and is perpendicular to the plane of the camera. The ray is perpendicular to the plane of the camera. Moreover, the ray is perpendicular to the camera plane, and both P0 and P1 are located in the ray so that the pose of the camera can be calculated based on the vector formed by P0 and P1.

Fig. 5 is a schematic diagram of a relationship of P0 and P1 with a camera plane. As shown in Fig. 5, plane A'B'C'D' is the camera plane on a mobile phone or a computer, and the ray where P0P1 is located is perpendicular to the camera plane A'B'C'D'. P3 is a point in a vector parallel to the ground. In the embodiment, the camera is parallel to the ground by default. Therefore, both P0 and P3 are parallel to the ground. A normal P0P2 perpendicular to plane P3P0P1 and passing through point P0 is determined. A camera coordinate system is established according to P0, P1, and P2. The Z-axis of the camera coordinate system is direction P0P1, the X-axis of the camera coordinate system is direction P0P3, and the Y-axis of the camera coordinate system is direction P0P2. The rotation angle (i.e., the pitch angle) of the camera on the X-axis and the rotation angle (i.e., the yaw angle) of the camera on the Y-axis can be obtained by converting the camera coordinate system to the headset coordinate system.

The above description is made by taking the three-dimensional coordinates of P0 and P1 being the coordinates in the headset coordinate system as an example. It will be understood that other coordinate systems, such as world coordinate system or camera coordinate system, may also be adopted in this embodiment, and the coordinate systems may be converted to one another. Therefore, the respective coordinate systems may be selected according to actual requirements.

Optionally, after the second three-dimensional coordinates of the hand controller are obtained, the headset controls the visual marking information to move to a fixed position in the image, and obtains a confirmation instruction input by the user through the hand controller. The confirmation instruction is configured to confirm that at least one edge of the image shot by the camera is parallel to the horizontal plane.

In this embodiment, when fixing the camera, it needs to be guaranteed that at least one edge of the image shot by the camera is parallel to the horizontal plane. When at least one edge of the image shot by the camera is parallel to the horizontal plane, the roll angle of the camera may be 0 by default. By taking the camera coordinate system shown in Fig. 5 as an example, when fixing the camera, the camera should be made parallel to the horizontal plane in the X-axis direction (i.e., P0P3).

Exemplarily, after the second three-dimensional coordinates of the hand controller are obtained, the headset controls the visual marking information to horizontally move to a position on the right side in the image at a fixed distance from the central position. Then, the user pulls the trigger key of the hand controller to input the confirmation instruction. Further, third three-dimensional coordinates may be acquired when the user pulls the trigger key of the hand controller to input the confirmation instruction. Whether the bottom edge of the image shot by the camera is parallel to the horizontal plane (or an included angle is smaller than a preset threshold) is determined according to the second three-dimensional coordinates and the third three-dimensional coordinates. If the included angle between the bottom edge of the image shot by the camera and the horizontal plane is greater than the threshold, the user may be prompted to adjust the camera or correct the roll angle of the camera with the included angle as a compensation value.

Optionally, the user may also input the confirmation instruction in other ways. For example, a confirmation control is displayed in the image, and the user taps on the confirmation control to input the confirmation instruction.

Optionally, in an implementation, after the second three-dimensional coordinates of the hand controller are obtained, at least one edge of the image shot by the camera is parallel to the horizontal plane by default. That is, the user does not need to input the confirmation instruction to confirm that at least one edge of the image shot by the camera is parallel to the horizontal plane.

In an implementation, the headset uses the pitch angle, the yaw angle, and the roll angle of the camera as the pose of the camera. In another implementation, the headset performs quaternion conversion on the pitch angle, the yaw angle, and the roll angle of the camera and uses the quaternion obtained after conversion as the pose of the camera.

In the way above, the headset obtains the position and the pose of the camera. The pose of the camera may be a pose in the world coordinate system, or a pose in the headset coordinate system, or a pose in other coordinate systems, which is not limited in this embodiment.

After the calibration of the camera is completed, the headset may start mixed reality capture. Exemplarily, the headset sets a pose of a virtual camera in a virtual scene according to the pose of the camera such that the pose of the virtual camera is consistent with the pose of the camera. A user picture shot by the camera is received. The virtual scene is fused with the user picture, and the fused virtual scene is stored.

In the method of this embodiment, the user can realize rapid calibration only by determining two points using the hand controller, and the calibration result is accurate and will not be affected by the following factors.

(1) The calibration will not be affected by the joypad. There is no need to provide a suitable algorithm and calibration manner for the joypad of each generation. The calibration is not restricted by the color and the style of the joypad.

(2) The calibration will not be affected by the device. Any type of external camera can be calibrated, and there is no need to perform a large amount of processing and calculation as for a camera terminal in the prior art. The calibration method of this embodiment is carried out by the headset.

(3) The calibration will not be affected by the ambient light. The accuracy of the calibration result is improved. However, an existing calibration method is susceptible to the ambient light, resulting in that the calibration algorithm failing to identify a feature point and leading to a failure in calibration.

In this embodiment, the position and the pose of the camera are obtained separately in different ways. That is, the method of this embodiment is a combined positioning method with a 3Dof position + a 3Dof pose. The existing approach of performing PnP calculation based on the image shot by the camera to obtain the pose of the camera is 6DoF positioning. Compared with 6Dof positioning, the method of this embodiment can overcome the disadvantage that the image is easily affected by the light environment.

(4) The calibration will not be affected by the distance. Only two points need to be determined using the joypad. The operation is easy.

In the embodiment, the first three-dimensional coordinates of the hand controller when the user puts the hand controller close to the camera are obtained, and the position of the camera is determined according to the first three-dimensional coordinates. The camera is disposed fixedly and configured to shoot the behavior of the user. The image shot by the camera is displayed, with the visual marking information being displayed at the central position of the image. The second three-dimensional coordinates of the hand controller when the hand controller is located at the position of the visual marking information in the image are obtained. The pose of the camera is determined according to the first three-dimensional coordinates and the second three-dimensional coordinates. In this way, the user can rapidly complete the calibration of the camera by only needing to determine two points using the hand controller. The calibration process is simple and easy to operate, and the calibration result is accurate.

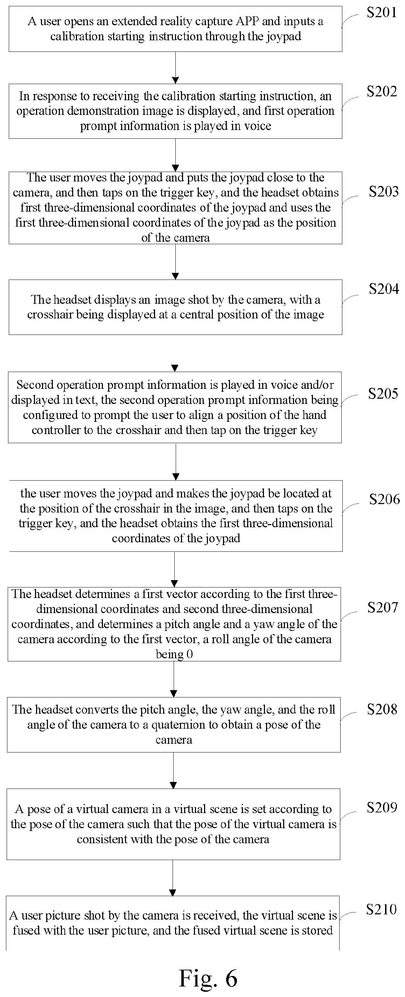

Fig. 6 is a flowchart of mixed reality capture of a headset according to the embodiments of the present disclosure. The embodiment is described in conjunction with a user operation and internal processing of the headset. The embodiment is described by taking the hand controller being a joypad as an example. As shown in Fig. 6, the method provided in the embodiment includes the following steps.

At S201, a user opens an extended reality capture APP and inputs a calibration starting instruction through the joypad.

The user opens the extended reality capture APP on the headset. There is a calibration function entry on the page of the extended reality capture APP. The user taps on a calibration starting control through the joypad to input the calibration starting instruction.

After the user inputs the calibration starting instruction, the headset enables the VST mode and the 6Dof positioning function in the background by default.

At S202, in response to receiving the calibration starting instruction, an operation demonstration image is displayed, and first operation prompt information is played in voice.

The operation demonstration image is a schematic diagram of putting the hand controller close to a camera, and the first operation prompt information is configured to prompt the user to put the hand controller close to the camera and then taps on a trigger key.

At S203, the user moves the joypad and puts the joypad close to the camera, and then taps on the trigger key. The headset obtains first three-dimensional coordinates of the joypad and uses the first three-dimensional coordinates of the joypad as the position of the camera.

According to the operation demonstration image displayed on the headset and the first operation prompt information played in voice, the user holds the joypad in hand and moves the joypad in contact with the camera. After the joypad is in contact with the camera, the user taps on the trigger key of the joypad. After receiving a tapping operation of the user on the trigger key of the joypad, the headset obtains the first three-dimensional coordinates of the joypad.

At S204, the headset displays an image shot by the camera, with a crosshair being displayed at a central position of the image.

The camera continuously sends the images shot to the headset. The image shot by the camera includes a user image. The headset displays the image shot by the camera, and the crosshair is displayed at the central position of the image. The crosshair is configured to mark the current location as the central position of the image.

At S205, second operation prompt information is played in voice and/or displayed in text, the second operation prompt information being configured to prompt the user to align a position of the hand controller to the crosshair and then tap on the trigger key.

At S206, the user moves the joypad and makes the joypad be located at the position of the crosshair in the image, and then taps on the trigger key. The headset obtains the first three-dimensional coordinates of the joypad.

At S207, the headset determines a first vector according to the first three-dimensional coordinates and second three-dimensional coordinates, and determines a pitch angle and a yaw angle of the camera according to the first vector, a roll angle of the camera being 0.

At S208, the headset converts the pitch angle, the yaw angle, and the roll angle of the camera to a quaternion to obtain a pose of the camera.

At S209, a pose of a virtual camera in a virtual scene is set according to the pose of the camera such that the pose of the virtual camera is consistent with the pose of the camera.

At S210, a user picture shot by the camera is received, the virtual scene is fused with the user picture, and the fused virtual scene is stored.

The calibration of the pose of the camera is completed through steps S201-S208, and the calibration of the image shot by the camera and the image of the virtual scene is completed through S209. Or, the calibration is described as that of the pose of the camera and the pose of the virtual camera in the virtual scene. Capture is completed through S210.

In the embodiment, in the calibration process of the image shot by the camera and the image of the virtual scene, the user only needs to move the joypad and can complete the calibration by determining two points according to the position of the joypad. This process is not limited by the shape of the joypad, the ambient light, the distance of the user from the camera, and the like. The accurate pose of the camera can be obtained. The accuracy of the calibration result and the calibration success rate are increased.

Optionally, after the second point of the joypad is obtained, the headset controls the crosshair to move to the right side of the image. Then, the user moves the joypad again. When the joypad is located at the position of the crosshair on the right side in the image, the user taps on the trigger key of the handle and inputs the confirmation instruction to confirm that at least one edge of the image shot by the camera is parallel to the horizontal plane.

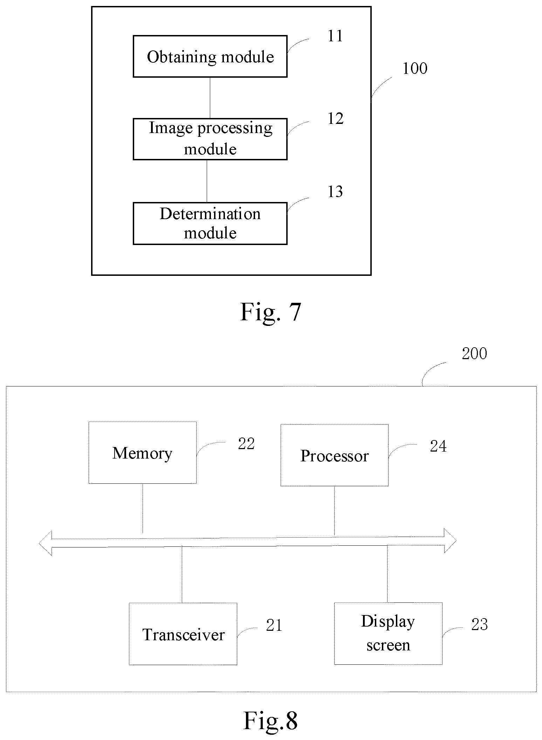

In order to better implement the space calibration method of the embodiments of the present disclosure, an embodiment of the present disclosure further provides an apparatus for calibrating an external camera of a headset. Fig. 7 is a structural schematic diagram of an apparatus for calibrating an external camera of a headset according to the embodiments of the present disclosure. As shown in Fig. 7, the apparatus 100 for calibrating an external camera of a headset may include:
an obtaining module 11 configured to obtain first three-dimensional coordinates of a hand controller when a user puts the hand controller close to a camera, and determine a position of the camera according to the first three-dimensional coordinates, the camera being disposed fixedly and configured to shoot a behavior of the user;
an image processing module 12 configured to display an image shot by the camera, with visual marking information being displayed at a central position of the image;
the obtaining module 11 being further configured to obtain second three-dimensional coordinates of the hand controller when the hand controller is located at the position of the visual marking information in the image; and
a determination module 13 configured to determine a pose of the camera according to the first three-dimensional coordinates and the second three-dimensional coordinates.
In some implementations, the determination module 13 is specifically configured to:
determine a first vector according to the first three-dimensional coordinates and the second three-dimensional coordinates, and determine a pitch angle and a yaw angle of the camera according to the first vector, a roll angle of the camera being at a fixed value; and
determine the pose of the camera according to the pitch angle, the yaw angle, and the roll angle of the camera.

In some implementations, the determination module 13 is specifically configured to perform quaternion conversion on the pitch angle, the yaw angle, and the roll angle of the camera to obtain the pose of the camera.

In some implementations, the obtaining module 11 is specifically configured to:
determine the first three-dimensional coordinates as three-dimensional coordinates of the camera; or
adjust the first three-dimensional coordinates according to a preset adjustment parameter to obtain the three-dimensional coordinates of the camera.

In some implementations, the camera is disposed fixedly according to a preset direction such that at least one edge of an image shot by the camera is parallel to a horizontal plane.

In some implementations, a value of the roll angle of the camera is 0.

In some implementations, the image processing module 12 is further configured to control the visual marking information to move to a fixed position in the image, and obtain a confirmation instruction input by the user through the hand controller, the instruction being configured to confirm that at least one edge of the image shot by the camera is parallel to a horizontal plane.

In some implementations, the visual marking information is a crosshair or a circle.

In some implementations, the obtaining module 11 is specifically configured to:
receive a coordinate obtaining instruction, the coordinate obtaining instruction being input when the user puts the hand controller close to the camera; and
in response to the coordinate obtaining instruction, determine three-dimensional coordinates of the hand controller at a moment corresponding to the coordinate obtaining instruction, and use the three-dimensional coordinates of the hand controller at the moment corresponding to the coordinate obtaining instruction as the first three-dimensional coordinates.

In some implementations, the coordinate obtaining instruction is an operation of the user on a determination control of the hand controller.

In some implementations, the apparatus further includes a prompt module configured to:

in response to receiving a calibration starting instruction, display an operation demonstration image, and play in voice first operation prompt information, the operation demonstration image being a schematic diagram of putting the hand controller close to the camera, and the first operation prompt information being configured to prompt the user to put the hand controller close to the camera and then input the coordinate obtaining instruction.

In some implementations, the obtaining module 11 is specifically configured to:
receive a coordinate obtaining instruction, the coordinate obtaining instruction being input when the hand controller is located at the position of the visual marking information in the image; and
in response to the coordinate obtaining instruction, determine three-dimensional coordinates of the hand controller at a moment corresponding to the coordinate obtaining instruction, and use the three-dimensional coordinates of the hand controller at the moment corresponding to the coordinate obtaining instruction as the second three-dimensional coordinates.

In some implementations, the coordinate obtaining instruction is an operation of the user on a determination control of the hand controller.

In some implementations, the apparatus further includes a prompt module configured to:

play in voice and/or display in text second operation prompt information, the second operation prompt information being configured to prompt the user to align a position of the hand controller to the visual marking information and then input the coordinate obtaining instruction.

In some implementations, the apparatus further includes:
a capture module configured to: set a pose of a virtual camera in a virtual scene according to the pose of the camera such that the pose of the virtual camera is consistent with the pose of the camera; and
receive a user picture shot by the camera, fuse the virtual scene with the user picture, and store the fused virtual scene.

In some implementations, the camera is a mobile phone camera, a computer camera, or a special camera.

It is to be understood that the apparatus embodiments may correspond to the method embodiments, and for similar description, reference may be made to the method embodiments. The similar description will not be repeated here to avoid repetition.

The apparatus 100 of the embodiments of the present disclosure is described above from the perspective of functional modules with reference to the drawings. It is to be understood that the functional modules may be implemented by hardware, or may be implemented by instructions in the form of software, or may be implemented by both hardware and software modules in combination. Specifically, the steps of the method embodiments in the embodiments of the present disclosure may be performed by using an integrated logic circuit of hardware in a processor or by using instructions in the form of software. The steps of the methods disclosed in conjunction with the embodiments of the present disclosure may be directly performed by a hardware decoding processor, or performed by a combination of hardware and software modules in the decoding processor. Optionally, the software module may be located in a mature storage medium in the art, such as a random access memory (RAM), a flash memory, a read-only memory, a programmable read-only memory, an electrically erasable programmable memory, or a register. The storage medium is located in a memory. The processor reads information in the memory, and completes the steps of the above-described method embodiments.

An embodiment of the present disclosure further provides a headset. Fig. 8 is a structural schematic diagram of a headset according to the embodiments of the present disclosure. As shown in Fig. 8, the headset 200 may include:

a memory 21 and a processor 22, the memory 21 being configured to store a computer program and transmit the code of the program to the processor 22. In other words, the processor 22 can call and run the computer program in the memory 21 to implement the methods in the embodiments of the present disclosure.

For example, the processor 22 can be configured to perform the above-described method embodiments according to the instructions in the computer program.

In some embodiments of the present disclosure, the processor 22 may include, but is not limited to:
a general-purpose processor, a digital signal processor (DSP), an application-specific integrated circuit (ASIC), a field-programmable gate array (FPGA), another programmable logic device, a discrete gate or transistor logic device, or a discrete hardware component.

In some embodiments of the present disclosure, the memory 21 includes, but is not limited to:
a volatile memory and/or a nonvolatile memory. The non-volatile memory may be ready-only memory (ROM), a programmable ROM (PROM), an erasable PROM (EPROM), an electrically EPROM (EEPROM), or a flash memory. The volatile memory may be a random access memory (RAM), which is used as an external cache. Through illustrative rather than restrictive description, RAMs of many forms are available, for example, a static RAM (SRAM), a dynamic RAM (DRAM), a synchronous DRAM (SDRAM), a double data rate SDRAM (DDR SDRAM), an enhanced SDRAM (ESDRAM), synch link DRAM (SLDRAM), and a direct rambus RAM (DRRAM).

In some embodiments of the present disclosure, the computer program may be divided into one or more modules which are stored in the memory 21 and executed by the processor 22 to complete the method provided by the present disclosure. The one or more modules may be a series of computer program instruction segments capable of implementing specific functions, and the instruction segments are used for describing an execution process of the computer program in the headset.

As shown in Fig. 8, the headset may further include a transceiver 23, a display screen 24, etc. The processor 22 is electrically connected to the transceiver 23 and the display screen 24.

The processor 22 may control the transceiver 23 to communicate with other devices, specifically, to send information or data to other devices or receive information or data sent by other devices. The transceiver 23 may include a transmitter and a receiver. The transceiver 23 may further include an antenna. The number of antennas may be one or more.

The display screen 24 may be configured to display various virtual reality scenes, VST videos, etc. A single or two organic light emitting diode (OLED) displays may be used as the display screen 24. As a matter of course, other types of display solutions may also be adopted, such as two small displays, microdisplays, or flexible displays.

It will be understood that although not shown in Fig. 8, the headset 200 may further include a camera module, a wireless fidelity (WIFI) module, a positioning module, a Bluetooth module, etc., which will not be described redundantly here.

It should be understood that the components in the headset are connected by a bus system, wherein the bus system includes a power bus, a control bus, and a status signal bus in addition to a data bus.

The present disclosure further provides a computer storage medium on which a computer program is stored. The computer program, when executed by a computer, causes the computer to perform the methods of the above-described method embodiments. Alternatively, an embodiment of the present disclosure further provides a computer program product including instructions which, when executed by a computer, cause the computer to perform the methods of the above-described method embodiments.

The present disclosure further provides a computer program product including a computer program which is stored in a computer-readable storage medium. A processor of a headset reads the computer program from the computer-readable storage medium. The processor executes the computer program such that the headset to perform the corresponding flows in the above-described method embodiments, which will not be described redundantly here for brevity.

In several embodiments provided in the present disclosure, it should be understood that the disclosed systems, apparatuses, and methods may be implemented in other ways. For example, the apparatus embodiments described above are merely illustrative. For example, the module division is merely a logical function division, and there may be other division manners in actual implementation. For example, a plurality of modules or components may be combined or integrated into another system, or some features may be ignored or may not be performed. In addition, the displayed or discussed mutual couplings or direct couplings or communication connections may be implemented through some interfaces, indirect couplings or communication connections between the apparatuses or modules, or electrical connections, mechanical connections, or connections in other forms.

The modules described as separate components may or may not be physically separate, and components displayed as modules may or may not be physical modules, may be located in one position, or may be distributed on a plurality of network elements. Part or all of the modules may be selected based on actual needs to achieve the objectives of the solutions of the embodiments. For example, functional modules in the embodiments of the present disclosure may be integrated into one processing module or each of the modules may exist alone physically, or two or more modules are integrated into one module.

The foregoing descriptions are merely specific embodiments of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the application shall be subject to the protection scope of the claims.

## Claims

1. A method for calibrating an external camera of a headset, the method being applicable to a headset and comprising:
obtaining first three-dimensional coordinates of a hand controller when a user puts the hand controller close to a camera, and determining a position of the camera according to the first three-dimensional coordinates, the camera being disposed fixedly and configured to shoot a behavior of the user (S101);
displaying an image shot by the camera, with visual marking information being displayed at a central position of the image (S102);
obtaining second three-dimensional coordinates of the hand controller when the hand controller is located at a position of the visual marking information in the image (S103); and
determining a pose of the camera according to the first three-dimensional coordinates and the second three-dimensional coordinates (S104).

2. The method according to claim 1, wherein the determining a pose of the camera according to the first three-dimensional coordinates and the second three-dimensional coordinates comprises:
determining a first vector according to the first three-dimensional coordinates and the second three-dimensional coordinates, and determining a pitch angle and a yaw angle of the camera according to the first vector, a roll angle of the camera being a fixed value; and
determining the pose of the camera according to the pitch angle, the yaw angle, and the roll angle of the camera, and
preferably, a value of the roll angle of the camera is 0.

3. The method according to claim 2, wherein the determining the pose of the camera according to the pitch angle, the yaw angle, and the roll angle of the camera comprises:
performing quaternion conversion on the pitch angle, the yaw angle, and the roll angle of the camera to obtain the pose of the camera.

4. The method according to claim 1, wherein the determining a position of the camera according to the first three-dimensional coordinates comprises:
determining the first three-dimensional coordinates as three-dimensional coordinates of the camera; or
adjusting the first three-dimensional coordinates according to a preset adjustment parameter to obtain the three-dimensional coordinates of the camera.

5. The method according to claim 1, wherein the camera is disposed fixedly according to a preset direction in which at least one edge of an image shot by the camera is parallel to a horizontal plane.

6. The method according to claim 1, after the obtaining second three-dimensional coordinates of the hand controller when the hand controller is located at a position of the visual marking information in the image, the method further comprising:
controlling the visual marking information to move to a fixed position in the image, and obtaining a confirmation instruction input by the user through the hand controller, the instruction being configured to confirm that at least one edge of the image shot by the camera is parallel to a horizontal plane,
for example, wherein the visual marking information is a crosshair or a circle.

7. The method according to any one of claims 1 to 6, wherein the obtaining first three-dimensional coordinates of a hand controller when a user puts the hand controller close to a camera comprises:
receiving a coordinate obtaining instruction, the coordinate obtaining instruction being input when the user puts the hand controller close to the camera; and
in response to the coordinate obtaining instruction, detecting three-dimensional coordinates of the hand controller at a moment corresponding to the coordinate obtaining instruction, and using the three-dimensional coordinates of the hand controller at the moment corresponding to the coordinate obtaining instruction as the first three-dimensional coordinates, and
for example, wherein the coordinate obtaining instruction is an operation of the user on a determination control of the hand controller.

8. The method according to claim 7, further comprising:
in response to receiving a calibration starting instruction, displaying an operation demonstration image, and playing in voice first operation prompt information, the operation demonstration image being a schematic diagram of putting the hand controller close to the camera, and the first operation prompt information being configured to prompt the user to put the hand controller close to the camera and then input the coordinate obtaining instruction.

9. The method according to any one of claims 1 to 6, wherein the obtaining second three-dimensional coordinates of the hand controller when the hand controller is located at a position of the visual marking information in the image comprises:
receiving a coordinate obtaining instruction, the coordinate obtaining instruction being input when the hand controller is located at the position of the visual marking information in the image; and
in response to the coordinate obtaining instruction, detecting three-dimensional coordinates of the hand controller at a moment corresponding to the coordinate obtaining instruction, and using the three-dimensional coordinates of the hand controller at the moment corresponding to the coordinate obtaining instruction as the second three-dimensional coordinates, and
for example, wherein the coordinate obtaining instruction is an operation of the user on a determination control of the hand controller.

10. The method according to claim 9, after the displaying an image shot by the camera, the method further comprising:
playing in voice and/or displaying in text second operation prompt information, the second operation prompt information being configured to prompt the user to align a position of the hand controller to the visual marking information and then input the coordinate obtaining instruction.

11. The method according to any one of claims 1 to 6, after a completion of calibrating the camera, the method further comprising:
setting a pose of a virtual camera in a virtual scene according to the pose of the camera such that the pose of the virtual camera is consistent with the pose of the camera; and
receiving a user picture shot by the camera, fusing the virtual scene with the user picture, and storing a fused virtual scene.

12. The method according to any one of claims 1 to 6, wherein the camera is a mobile phone camera, a computer camera, or a special camera.

13. An apparatus for calibrating an external camera of a headset, the apparatus comprising:
an obtaining module (11) configured to obtain first three-dimensional coordinates of a hand controller when a user puts the hand controller close to a camera, and determine a position of the camera according to the first three-dimensional coordinates, the camera being disposed fixedly and configured to shoot a behavior of the user;
an image processing module (12) configured to display an image shot by the camera, with visual marking information being displayed at a central position of the image;
the obtaining module (11) being further configured to obtain second three-dimensional coordinates of the hand controller when the hand controller is located at a position of the visual marking information in the image; and
a determination module (13) configured to determine a pose of the camera according to the first three-dimensional coordinates and the second three-dimensional coordinates.

14. A headset (200), comprising:
a processor (22) and a memory (21), the memory (21) being configured to store a computer program, and the processor (22) being configured to call and run the computer program stored in the memory (21) to perform the method according to any one of claims 1 to 12.

15. A computer-readable storage medium, configured to store a computer program which causes a computer to perform the method according to any one of claims 1 to 12.
